# EUROPÄISCHE PATENTSCHRIFT

(11) **EP 0 454 282 B1**
(45) Veröffentlichungstag und Bekanntmachung des Hinweises auf die Patenterteilung: **02.11.1994**
(21) Anmeldenummer: 91250108.7
(22) Anmeldetag: 18.04.1991
(51) Int. Cl.: B01F 7/04, B01J 19/18

(54) **Reaktor für hochviskose Medien**
High viscous media reactor
Réacteur pour milieux très visqueux

(30) Priorität: 26.04.1990 DE 4013912
(43) Veröffentlichungstag der Anmeldung: 30.10.1991
(73) Patentinhaber: KARL FISCHER INDUSTRIEANLAGEN GMBH, D-13509 Berlin (DE)
(72) Erfinder: Gerking, Lüder, Dr.-Ing., W-1000 Berlin 33 (DE)
(74) Vertreter: Pfenning, Meinig & Partner

(56) Entgegenhaltungen:
- EP-A- 0 262 594
- BE-A- 478 991
- CH-A- 378 663
- DE-C- 422 986
- FR-A- 925 111
- GB-A- 184 433
- GB-A- 1 179 713
- US-A- 1 655 424
- US-A- 2 784 950
- US-A- 3 941 357
- US-A- 4 514 090

## Beschreibung

Die Erfindung betrifft einen Reaktor für hochviskose Medien nach der Gattung des Hauptanspruchs.

Aus der DE-A-21 14 080 ist ein Reaktionsgefäß für Stoffe in fließfähigem Zustand, insbesondere für die Polykondensation von Präpolymeren zu Polyester mit hohem Molekulargewicht bekannt, das aus einem horizontal ausgerichteten Reaktorgehäuse mit einem Einlaß am einen und einem Auslaß am anderen Ende und einer im unteren Bereich des Reaktorinnenraumes mit geringem Spiel um eine in Richtung der Längsachse des Reaktorgehäuses verlaufenden Achse, drehbaren käfigartigen Einrichtung zum Bewegen und Fördern des fließfähigen Stoffes besteht. Die käfigartige Einrichtung weist Längsholme und an den Längsholmen befestigte Ringscheiben auf, wobei die Ringscheiben aufeinanderfolgend in Richtung der Rotationsachse gegenüber dieser derart geneigt angeordnet sind, daß die Stoffe bei Drehung der käfigartigen Einrichtung vom Einlaß zum Auslaß gefördert werden. Mit einem derartigen Reaktionsgefäß ist es möglich, fließfähiges Material sowohl zu mischen als auch im Reaktor zu fördern und dabei freie Oberflächen stets neu zu bilden.

Es hat sich aber gezeigt, daß dieser Reaktor zur Behandlung von hochviskosen oder pastösen Massen, wie dem gegenüber Polyester zäheren Polyamid oder Polyester für direkt gesponnene Reifencordfäden, nicht in gewünschter Weise geeignet ist, da der Reaktor zwar die notwendige Scherung und damit Mischung gewährleistet, nicht aber die gleichmäßige Selbstreinigung mit sich bringt, die wegen des Anhaftens des hochviskosen Mediums an den Reaktorelementen notwendig wäre.

Der Erfindung liegt die Aufgabe zugrunde, einen Reaktor für hochviskose Medien, die als Schmelze oder allgemein als sehr zähe Flüssigkeit vorliegen, zu schaffen, der eine gute Durchmischung und Förderung des Mediums gewährleistet, wobei ein längeres Anhaften des Mediums in den Reaktorteilen verhindert werden soll, um eine möglichst gleichmäßige Verweilzeit aller Mediumteilchen zu erzielen.

Diese Aufgabe wird erfindungsgemäß durch die kennzeichnenden Merkmale des Hauptanspruchs gelöst. Dadurch, daß zwei Rotoren relativ zueinander umlaufen und mit Elementen zum Mischen, Fördern und Abstreifen bzw. Entfernen des anhaftenden Mediums versehen sind, wird eine hervorragende Durchmischung bei gleichmäßigem Durchlauf und engem Verweilspektrum des hochviskosen Mediums gewährleistet, wobei gleichzeitig alle Flächen zumindest des einen Rotors und auch des Reaktorgehäuses abgeschabt und gereinigt werden. Da keine Zentralwelle vorgesehen ist, und somit ein hinreichend freier Raum für die abtropfende Schmelze zur Verfügung steht, können große Oberflächen und freifallende Filme gebildet werden, die einerseits eine sehr gute Durchmischung mit sich bringen und außerdem die häufig gewünschte und bei chemischen Reaktionen notwendig werdende Abführung der flüchtigen Bestandteile verbessert. Der Rotor, der hauptsächlich abstreift, fördert das Medium in Strömungsrichtung, so daß der andere Rotor, der hauptsächlich mischt, einfacher aufgebaut sein kann. Insgesamt wird ein Rotorsystem zur Verfügung gestellt, das bei guter Mischung, wobei eine Scherung auf das hochviskose Medium ausgeübt wird, gleichmäßiger Förderung und guter Reinigungswirkung einen leichten und einfachen Aufbau aufweist.

Durch die in den Unteransprüchen angegebenen Maßnahmen sind vorteilhafte Weiterbildungen und Verbesserungen möglich. Der erste Rotor weist vorteilhafterweise als Schabeleisten ausgebildete Längsholme auf, wodurch die Innenwand des Reaktorgehäuses abgeschabt wird und Reste des Mediums entfernt werden. Bei schräger Anordnung der Längsholme wird die Förderung des Mediums in der Hauptströmrichtung axial durch den Reaktor unterstützt.

Dadurch, daß der zweite Rotor aus hintereinander angeordneten Ringen besteht, an denen Abstreifelemente und Umlenkflächen befestigt sind, die die Ringe miteinander verbinden, wird ein leichter Rotor mit ausreichender Steifigkeit gebildet, der nur geringe Flächen aufweist, so daß wenig Medium anhaften kann. Vorteilhafterweise wird der zweite Rotor von Zeit zu Zeit in einer der Betriebsdrehrichtung entgegengesetzten Richtung gedreht, damit auch die Rückseite der Abstreifelemente von dem pastösen Medium beispielsweise von Schleifbärten gereinigt werden können. Die pflugscharähnliche Ausbildung der Abstreifelemente gewährleistet eine gleichmäßige Förderung des Mediums in Strömungsrichtung bei einfacher Konstruktion.

Ein Ausführungsbeispiel der Erfindung ist in der Zeichnung dargestellt und wird in der nachfolgenden Beschreibung näher erläutert.
Es zeigen:
- Fig. 1: eine Ansicht des erfindungsgemäßen Rotors, wobei der außenliegende käfigförmige Rotor geschnitten ist und der innen drehende Abstreifrotor bis auf die Endscheiben in der Ansicht gezeigt ist,
- Fig. 2: eine perspektivische Ansicht des käfigförmigen Rotors mit einem Teil des Abstreifrotors, welcher gestrichelt gezeichnet ist,
- Fig. 3: eine vergrößerte Darstellung eines Abstreifelementes des Abstreifrotors zwischen den Ringen des käfigförmigen Rotors,
- Fig. 4: einen Ausschnitt aus dem Abstreifrotor mit zwei pflugscharähnlichen Förderelementen, und
- Fig. 5: einen Ausschnitt aus einem Schnitt durch den Abstreifrotor mit hinten verkleideter Abstreiffläche.

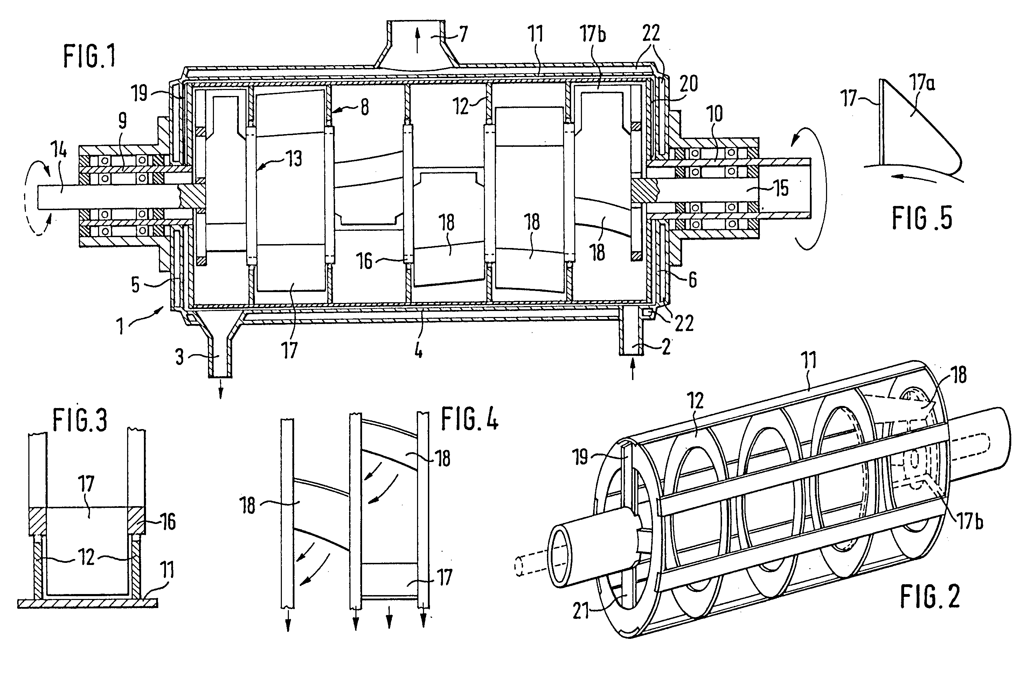

In Fig. 1 ist ein Reaktor 1 dargestellt, wie er beispielsweise für die Behandlung von Polyamid 6 oder hochviskosem Polyester verwendet wird. Er weist einen Einlaß 2 für die Beschickung des Reaktors mit dem hochviskosen bzw. pastösen Medium und einen Auslaß 3 auf, durch welchen das Medium ausgetragen wird. In dem Reaktor 1 wird das Medium vom Einlaß 2 zum Auslaß 3 gefördert und dabei gemischt, durchgerührt und einer großen Oberflächenbildung unterworfen. Der Reaktorkessel bzw. das Reaktorgehäuse 4 ist ein herkömmlicher mantelbeheizter Doppelwandkessel mit einer Innenwand 4, inneren Stirnwänden 5, 6, von denen das zu bearbeitende hochviskose Medium umschlossen wird, wobei weiterhin Außenwandungen und äußere Stirnwände vorgesehen sind, die mit den inneren Wänden einen Heiz- oder Kühlmantel 22 bilden, in den zur Erwärmung oder Kühlung des hochviskosen Mediums ein Heiz- oder Kühlmedium eingeführt werden kann. An der Innenseite des oberen Teils des Reaktorgehäuses ist ein Anschluß 7 vorgesehen, durch den die flüchtigen Bestandteile des hochviskosen Mediums abgeführt werden können. Vielfach wird dabei der Innenraum des Reaktors unter Vakuum gehalten, um die Entgasung zu erleichtern.

Innerhalb des Reaktorgehäuses 4,5,6 ist ein käfigartiger Rotor 8 mittels an den Stirnseiten drehbar gelagerten Stummelwellen 9,10 angeordnet. Der käfigartige Rotor 8 besteht, wie in Fig. 2 dargestellt, aus in Längsrichtung angeordneten Schabeleisten 11, an denen senkrecht zur Längsachse Ringscheiben 12 befestigt sind. Die Ringscheiben können von unterschiedlicher Gestalt sein, beispielsweise können sie mit Löchern versehen sein, gitterartig oder gitternetzartig ausgebildet sein.

Konzentrisch mit dem käfigartigen Rotor liegt drehbar ein Abstreifrotor 13, der ebenfalls über Stummelwellen 14,15 gelagert ist, die ihrerseits in den Stummelwellen 9,10 für den käfigartigen Rotor 8 geführt sind. Der käfigartige Rotor 8 und der Abstreifrotor 13 können beispielsweise über ein Planetengetriebe starr miteinander gekoppelt sein. Die Rotoren 8,13 können gleichsinnig oder gegensinnig umlaufen, wobei die Drehzahlen entsprechend der gewünschten Wirkung hinsichtlich Durchmischung und Scherung und der Fördergeschwindigkeit gewählt werden.

Der Abstreifrotor 13 besteht aus Ringen 16, zwischen denen Abstreifelemente 17 befestigt sind, so daß eine starre Einheit als Abstreifrotor 13 entsteht. Einige oder alle Abstreifelemente 17 können als Förderelemente 18 ausgebildet sein und beispielsweise die Form einer Pflugschar gemäß Fig. 4 aufweisen. Es genügt, wenn die Abstreifelemente 17 statt ganzer Flächen nur als Winkelrahmen 17b ausgebildet sind.

Selbstverständlich können die Förderelemente auch als Haken oder dergleichen ausgebildet sein. Die Abstreif- oder Förderelemente 17 können auch zusätzlich mit Versteifungen versehen sein. Wie aus Fig. 3 zu erkennen ist, schaben die Abstreifelemente 17 sowohl die Seitenflächen der Ringscheiben 12 als auch die Innenflächen der Schabeleisten 11 ab, während die Schabeleisten 11 die Innenfläche des Reaktorgehäuses 4 abschaben. Die Stirnwände 5 und 6 können durch Abschabeflächen 19 und 20 an den Verbindungselementen, im allgemeinen Speichen 21, zwischen käfigförmigem Rotor und seinen Stummelwellen 9 bzw. 10 von anhaftendem Material ständig gereinigt werden. Dies kann auf gleiche Weise zwischen den beiden Rotoren an den Stirnseiten geschehen, was hier nicht gezeigt ist.

Durch diese Anordnung gibt es fast keine nicht abstreifbaren Flächen. Die Rückseiten der Abstreif- oder Förderelemente 17 lassen sich dadurch reinigen, daß der Abstreifrotor gelegentlich in einer zu seiner Betriebsdrehrichtung entgegengesetzten Richtung gedreht wird. Dabei hilft es, wenn die Absteifelemente 17 und gegebenenfalls auch die Förderelemente 18 auf der Rückseite der Strömung angepaßt verkleidet sind, wie in Fig. 5 mit 17a gezeigt ist. Das unterstützt die Reinigungswirkung beim Rückwärtsdrehen und dient auch zur Verhinderung von Anhaftungen von vornherein an den Rückseiten 17a dieser Elemente 17. Vorteilhaft kann es bei besonders zähen Medien sein, wenn der käfigartige Rotor beheizt wird.

Die Schabeleisten können als Schöpfleisten ausgebildet sein und weiterhin können sie schräg angestellt sein, um die Förderung des viskosen Mediums zu unterstützen. Je nach der Forderung nach Festigkeit des Abstreifrotors 13, die im wesentlichen durch die von den Abstreif- und Förderelementen 17 aufzunehmenden Scher- und Förderkräfte bestimmt ist, können anstelle der Ringe 16 auch jeweils zwei fest miteinander verbundende Rohrreifen vorgesehen sein, an denen die Abstreifelemente 17 befestigt sind.

Der Reaktor kann kontinuierlichem Betrieb dienen, wobei gleiche Mengen über den Einlaß 2 eintreten wie über den Auslaß 3 austreten, oder absatzweise, wenn eine bestimmte Menge eine bestimmte Zeit darin behandelt wird und dann, zum Beispiel durch gegensinniges Drehen eines Rotors entleert wird.

Es sind andere, im einzelnen hier nicht beschriebene Formen der konstruktiven Gestaltung der Elemente möglich, die das Mischen, Fördern, Flächenbilden und gegenseitig Reinigen von den hochviskosen Massen an den beiden ineinander drehenden Rotoren ermöglichen. So können ringförmige Mischelemente einen inneren Rotor bilden und der äußere Rotor kann das Abschaben nicht nur des zylindrischen Reaktorgehäuses 4 sondern auch dieser Mischelemente besorgen. Zwischenformen sind möglich. Gemeinsam ist allen das Prinzip zweier drehender Rotoren, von denen der eine innerhalb des anderen umläuft, wobei es gelingt, das Medium gut durchzumischen und gleichmäßig zu fördern und Oberflächen bis auf sehr geringe Restflächen abzuschaben. Eine solche Fläche ist in der in Fig. 1 gezeigten Ausführung die innere Ringfläche des Ringes 16. Auch diese kann strömungsgünstig zum besseren Abfließen der Massen ausgebildet sein.

## Patentansprüche

1. Reaktor für hochviskose Medien mit einem einen Einlaß (2) und einen Auslaß (3) aufweisenden horizontal ausgerichteten Reaktorgehäuse (4), in dem ein käfigförmiger erster Rotor (8) über Stummelwellen (9,10) drehbar gelagert ist, der bei seiner Drehung in das hochviskose Medium eintaucht und es durchmischt, wobei ein Teil des Mediums in Umdrehungsrichtung mitgeführt wird und freie Oberflächen des Mediums durch das Abfließen und Abtropfen von dem ersten Rotor gebildet werden, dadurch gekennzeichnet, daß koaxial zum käfigförmigen ersten Rotor (8) ein zweiter Rotor (13) zum Entfernen von anhaftendem hochviskosem Medium gleichfalls über Stummelwellen (14,15) drehbar gelagert ist und daß mindestens einer der beiden Rotoren (8,13) Förderelemente (11,18) aufweist, die das Medium vom Einlaß zum Auslaß fördern, wobei der eine Rotor (8,13) in dem anderen Rotor (13,8) rotiert.

2. Reaktor nach Anspruch 1, dadurch gekennzeichnet, daß der zweite Rotor (13) innerhalb des ersten Rotors (8) drehbar gelagert ist.

3. Reaktor nach Anspruch 1 oder 2, dadurch gekennzeichnet, daß der erste Rotor (8) mit seinem äußeren Umfang in geringem Abstand zum Innenumfang des Gehäuses (4) liegt, derart, daß das Medium von der Innenwand des Reaktorgehäuses abgeschabt wird.

4. Reaktor nach einem der Ansprüche 1 bis 3, dadurch gekennzeichnet, daß der Käfig des ersten Rotors (8) durch Ringscheiben (12) gebildet ist, die durch Längsholme (11) miteinander verbunden sind.

5. Reaktor nach Anspruch 4, dadurch gekennzeichnet, daß die Längsholme (11) gleichzeitig Schabeleisten für die Innenwand des Gehäuses bilden.

6. Reaktor nach Anspruch 5, dadurch gekennzeichnet, daß zur Unterstützung der Förderung des Mediums die Längsholme (11) schräg angeordnet sind.

7. Reaktor nach einem der Ansprüche 1 bis 6, dadurch gekennzeichnet, daß der zweite Rotor (13) aus hintereinander angeordneten Ringen (16) besteht, die durch die Abstreifelemente (17) fest miteinander verbunden sind.

8. Reaktor nach einem der Ansprüche 1 bis 7, dadurch gekennzeichnet, daß mindestens einige der Abstreifelemente (17) als Förderelemente (18) ausgebildet sind.

9. Reaktor nach Anspruch 8, dadurch gekennzeichnet, daß die Förderelemente (18) pflugscharähnlich ausgebildet sind.

10. Reaktor nach einem der Ansprüche 1 bis 9, dadurch gekennzeichnet, daß der erste Rotor (8) und der zweite Rotor (13) im normalen Betrieb gleichsinnig umlaufen.

11. Reaktor nach einem der Ansprüche 1 bis 10, dadurch gekennzeichnet, daß der erste Rotor (8) und der zweite Rotor (13) im normalen Betrieb gegensinnig umlaufen.

12. Reaktor nach einem der Ansprüche 1 bis 11, dadurch gekennzeichnet, daß der erste Rotor (8) und der zweite Rotor (13) mit unterschiedlicher Drehgeschwindigkeit umlaufen.

13. Reaktor nach einem der Ansprüche 1 bis 12, dadurch gekennzeichnet, daß der zweite Rotor (13) zur Reinigung von Zeit zu Zeit in einer zu seiner normalen Umlaufrichtung entgegengesetzten Richtung dreht.

14. Reaktor nach einem der Ansprüche 1 bis 13, dadurch gekennzeichnet, daß der erste Rotor (8) beheizt ist.

15. Reaktor nach einem der Ansprüche 1 bis 14, dadurch gekennzeichnet, daß Abstreifelemente (18) und/oder Förderelemente (18) auf ihren Rückseiten, der Strömung angepaßt, verkleidet sind.

## Claims

1. A reactor for highly viscous media, comprising a horizontally oriented reactor housing (4) with an inlet (2) and an outlet (3) and with a cage-like first rotor (8), which is mounted therein so as to be rotatable via stub shafts (9, 10) and which dips into and mixes the highly viscous medium during its rotation, and that a portion of the medium is moved along in the rotational direction and free surfaces of the medium are formed by discharging and dripping from the first rotor, **characterised in that** coaxially to the cagelike first rotor (8) is mounted a second rotor (13) for the removal of adhering highly viscous medium so as to be rotatable via stub shafts (14, 15), and that at least one of the two rotors (8, 13) comprises conveying elements (11, 18) which convey the medium from the inlet to the outlet, and that the one rotor (8, 13) rotates in the other rotor (13, 8).

2. A reactor according to claim 1, **characterised in that** the second rotor (13) is rotatably mounted within the first rotor (8).

3. A reactor according to claim 1 or 2, **characterised in that** the first rotor (8) is placed with its outer circumference a short distance away from the inside circumference of the housing (4) so that the medium is scraped off the inside wall of the reactor housing.

4. A reactor according to one of claims 1 to 3, **characterised in that** the cage of the first rotor (8) is formed by annular discs (12) which are interconnected by longitudinal bars (11).

5. A reactor according to claim 4, **characterised in that** the longitudinal bars (11) also form scraping bars for the inside wall of the housing.

6. A reactor according to claim 5, **characterised in that** the longitudinal bars (11) are arranged at a slant so as to assist the conveying of the medium.

7. A reactor according to one of claims 1 to 6, **characterised in that** the second rotor (13) comprises rings (16), which are arranged one behind the other and firmly interconnected by the scraping elements (17).

8. A reactor according to one of claims 1 to 7, **characterised in that** at least some of the scraping elements (17) are arranged to be conveying elements (18)

9. A reactor according to claim 8, **characterised in that** the conveying elements (18) are arranged like a plow.

10. A reactor according to one of claims 1 to 9, **characterised in that** the first rotor (8) and the second rotor (13) rotate in the same direction during normal operation.

11. A reactor according to one of claims 1 to 10, **characterised in that** the first rotor (8) and the second rotor (13) rotate in opposite direction during normal operation.

12. A reactor according to one of claims 1 to 11, **characterised in that** the first rotor (8) and the second rotor (13) rotate at different rotational speed.

13. A reactor according to one of claims 1 to 12, **characterised in that** the second rotor (13) at times rotates in opposition to its normal rotational direction for the purpose of cleaning.

14. A reactor according to one of claims 1 to 13, **characterised in that** the first rotor (8) is heated.

15. A reactor according to one of claims 1 to 14, **characterised in that** the scraping elements (18) and/or the conveying elements (18) are at their rear covered to match the flow.

## Revendications

1. Réacteur pour milieux à viscosité élevée, comportant une enveloppe de réacteur (4) orientée horizontalement, présentant une entrée (2) et une sortie (3) et dans laquelle est monté, de façon à pouvoir tourner et par l'intermédiaire de tronçons d'arbre (9, 10), un premier rotor (8) en forme de cage d'écureuil et qui, lors de sa rotation, plonge dans le milieu à viscosité élevée et le mélange, une partie du milieu étant entraînée dans le sens de la rotation et des surfaces libres du milieu étant formées par l'écoulement et l'égouttement à partir du premier rotor, caractérisé en ce qu'un second rotor (13), pour l'élimination de milieu à viscosité élevée et adhérant est monté, de façon à pouvoir tourner, coaxialement au premier rotor (8) en forme de cage d'écureuil, également par l'intermédiaire de tronçons d'arbre (14, 15) et en ce qu'au moins un des deux rotors (8, 13) présente des éléments de transport (11, 18) qui transportent le milieu depuis l'entrée jusqu'à la sortie, un des rotors (8, 13) tournant dans l'autre rotor (13, 8).

2. Réacteur suivant la revendication 1, caractérisé en ce que le second rotor (13) est monté, de façon à pouvoir tourner, à l'intérieur du premier rotor (8).

3. Réacteur suivant la revendication 1 ou 2, caractérisé en ce que le premier rotor (8) est situé avec sa périphérie externe à une faible distance par rapport à la périphérie interne de l'enveloppe (4) de façon que le milieu soit raclé de la paroi interne de l'enveloppe de réacteur.

4. Réacteur suivant l'une des revendications 1 à 3, caractérisé en ce que la cage d'écureuil du premier rotor (8) est formée par des disques annulaires (12) qui sont reliés l'un à l'autre par des longerons (11).

5. Réacteur suivant la revendication 4, caractérisé en ce que les longerons (11) forment simultanément des barres de raclage pour la paroi interne de l'enveloppe.

6. Réacteur suivant la revendication 5, caractérisé en ce que les longerons (11) sont agencés en oblique pour aider au transport du milieu.

7. Réacteur suivant l'une des revendications 1 à 6, caractérisé en ce que le second rotor (13) est constitué d'anneaux (16) qui sont agencés l'un derrière l'autre et qui sont reliés rigidement l'un à l'autre par les éléments de raclage (17).

8. Réacteur suivant l'une des revendications 1 à 7, caractérisé en ce qu'au moins quelques uns des éléments de raclage (17) sont réalisés en forme d'éléments de transport (18).

9. Réacteur suivant la revendication 8, caractérisé en ce que les éléments de transport (18) sont réalisés d'une façon semblable à une charrue.

10. Réacteur suivant l'une des revendications 1 à 9, caractérisé en ce que le premier rotor (8) et le second rotor (13) tournent dans un même sens au cours du fonctionnement normal.

11. Réacteur suivant l'une des revendications 1 à 10, caractérisé en ce que le premier rotor (8) et le second rotor (13) tournent en sens opposés au cours du fonctionnement normal.

12. Réacteur suivant l'une des revendications 1 à 11, caractérisé en ce que le premier rotor (8) et le second rotor (13) tournent à des vitesses de rotation différentes.

13. Réacteur suivant l'une des revendications 1 à 12, caractérisé en ce que, pour le nettoyage, le second rotor (13) tourne de temps en temps dans un sens opposé par rapport à son sens normal de rotation.

14. Réacteur suivant l'une des revendications 1 à 13, caractérisé en ce que le premier rotor (8) est chauffé.

15. Réacteur suivant l'une des revendications 1 à 14, caractérisé en ce que des éléments de raclage (18) et/ou des éléments de transport (18) sont revêtus, de façon adaptée à l'écoulement, sur leurs côtés postérieurs
